(19) Europäisches Patentamt
European Patent Office
Office européen des brevets

(11) Publication number: **0 338 089 A1**

(12) **EUROPEAN PATENT APPLICATION published in accordance with Art. 158(3) EPC**

(21) Application number: **88908983.5**

(22) Date of filing: **17.10.88**

(86) International application number: **PCT/JP88/01054**

(87) International publication number: **WO 89/03560 (20.04.89 89/09)**

(51) Int. Cl.⁴: **G06F 12/14 , G06F 15/16**

(30) Priority: **17.10.87 JP 260782/87**

(43) Date of publication of application: **25.10.89 Bulletin 89/43**

(84) Designated Contracting States: **DE FR GB**

(71) Applicant: **FANUC LTD**
**3580, Shibokusa Aza-Komanba Oshino-mura**
**Minamitsuru-gun Yamanashi 401-05(JP)**

(72) Inventor: **MURAOKA, Yutaka Fanuc Dai-3**
**Vira-karamatsu**
**3527-1, Shibokusa Oshino-mura**
**Minamitsuru-gun**
**Yamanashi 401-05(JP)**

(74) Representative: **Billington, Lawrence Emlyn**
**HASELTINE LAKE & CO Hazlitt House 28**
**Southampton Buildings Chancery Lane**
**London WC2A 1AT(GB)**

# (54) APPARATUS FOR PROTECTING LOCAL MEMORY IN A MULTIPROCESSOR SYSTEM.

(57) An apparatus for protecting local memory in a multiprocessor system, which is capable of reliably protecting the data stored in the local memory. When the multiprocessor system is started, a boot-up processor (121) successively switches the logical level of control signals sent from the processor to cause three registers of a segment descriptor (114) to store the first to third segment display data of a local memory (112) connected to a main processor (111), thereby making these segments accessible, and then loads the operating system into the segments. The main processor then sends the fourth to sixth segment display data for storage and makes these segments accessible while inhibiting access to the segments in which the operating system is stored.

FIG. I

PROCESSOR
MAIN MODULE
111
101
113a
112
113
114
LOCAL MEMORY
WINDOW MEMORY
DESCRIPTOR
PROCESSOR
102
121
BOOT-UP MODULE
(CHANNEL)
PROCESSOR
103
131
CONTROLLER MODULE
(CHANNEL)
PROCESSOR
104
141
CONTROLLER MODULE
(CHANNEL)
1
2
INPUT/OUTPUT CIRCUIT
3
AUXILIARY STORAGE DEVICE

EP 0 338 089 A1

Xerox Copy Centre

# LOCAL MEMORY PROTECTION DEVICE FOR A MULTIPROCESSOR SYSTEM

## Technical Field

The present invention relates to a multiprocessor system of a type where a local memory of at least one processor is accessible by another processor, and more particularly, to a local memory protection device for a multiprocessor system, which is capable of positively protecting storage contents of the local memory.

## Background Art

In a multiprocessor system of a type in which a plurality of processors are connected to each other through a global bus, generally, access to a local memory of a certain processor by another processor is effected through a window. For instance, at start-up of the multiprocessor system, a boot-up processor operates to transmit an operating system read out from an external auxiliary storage, to a predetermined area of a local memory of a main processor through a window module.

From the reverse point of view, the above-mentioned arrangement renders the memory area having stored therein the operating system to be defenseless so that the operating system can be destroyed if a programming error is present in a program to be executed by the processor.

## Disclosure of the Invention

It is an object of the present invention to provide a local memory protection device in a multiprocessor system, which is capable of protecting memory contents of a local memory.

In order to achieve the above-mentioned object, according to one aspect of the present invention, a local memory protection device for use in a multiprocessor system of a type where a local memory connected to at least one of a plurality of processors connected to a global bus is accessible, through window means, by a processor other than the at least one processor, comprises: means for generating coded information representative of a segment among a plurality of segments of said local memory, which is to be rendered accessible by said at least one another processor; and means for storing said coded information delivered from said coded information generating means in a manner permitting the stored information to be updated.

According to another aspect, a local memory protection device of the invention comprises: the aforementioned coded information generating means; and means for storing flag information, which indicates that writing to the memory segment represented by said coded information is prohibited, in a manner corresponding to said coded information delivered from said coded information generating means.

As described above, according to the local memory protection device of the present invention, since the coded information representative of the segment of the local memory to be made accessible is stored in a manner capable of being updated, or the flag information representative of write prohibition is stored correspondingly to the coded information, it is possible to positively protect the memory contents of the memory segment other than the memory segment corresponding to the coded information or protection of the memory segments corresponding to the flag information.

## Brief Description of the Drawings

Fig. 1 is a diagrammatic block diagram showing a multiprocessor system equipped with a local memory protection device according to an embodiment of the present invention;

Fig. 2 is a circuit diagram showing an internal arrangement of a segment descriptor of Fig. 1; and

Fig. 3 is a circuit diagram showing peripheral components of the segment descriptor.

## Best Mode of Carrying Out the Invention

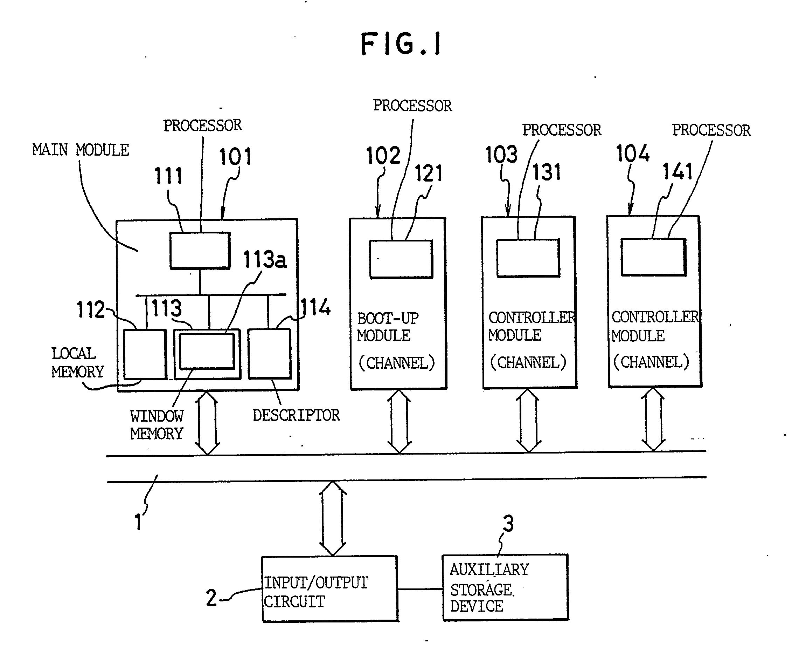

Referring to Fig. 1, a multiprocessor system for use as, for example, a control system for an unmanned factory comprises a main processor module 101 serving as a cell controller and for managing the entire system, a boot-up module (channel) 102 for transmitting an operating system from an external auxiliary storage 3 to the module 101 through an input/output circuit 2 at start-up of the system, and processor modules (channels) 103 and 104 serving respectively as controller modules. These modules have their respective processors 111, 121, 131 and 141, and are connected to a global bus 1, respectively. The multiprocessor system is so arranged as to effect communication among the processors by the use of a common address space system.

The main module 101 is provided with an eight-megabyte local memory 112, a window module 113 having a three-megabyte memory 113a, and a segment descriptor 114, which are connected to the processor 111 through an internal bus. The boot-up module 102 and the controller modules 103, 104 are so arranged as to be accessible to the local memory 112 through the window module 113. The memory 112 and the window memory 113a are divided respectively into eight and three segments each having one megabyte.

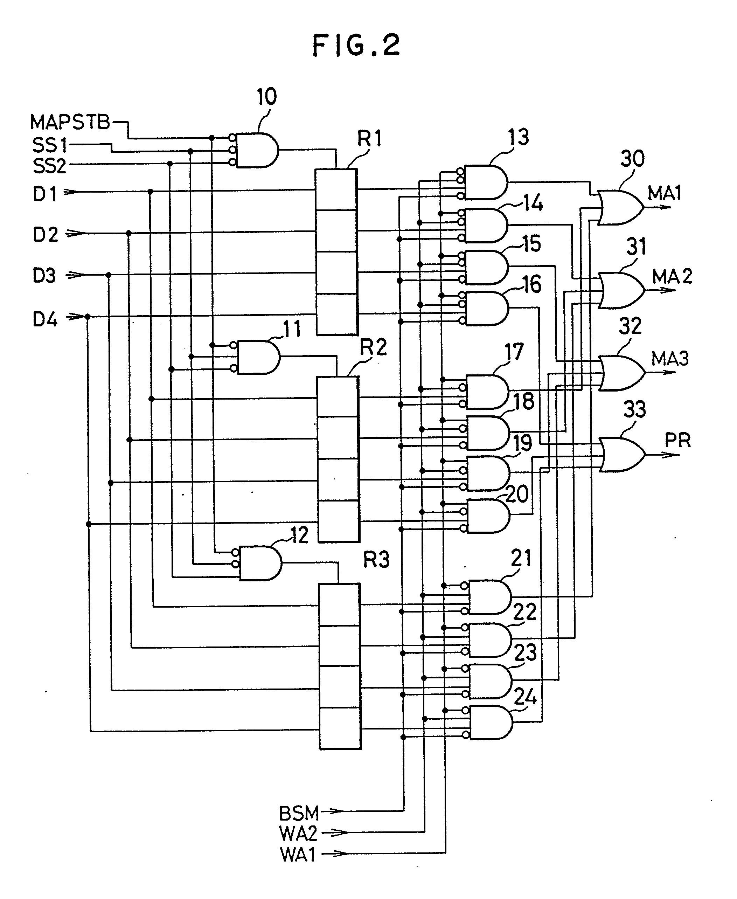

The segment descriptor 114 of the main module 101 is arranged to cause the segments of the window memory 113a to correspond respectively to arbitrary segments of the local memory 112 of the main module 101, and selectively prohibit writing to the respective window segment. As shown in Fig. 2, the segment descriptor 114 is provided with first to third AND gates 10 - 12 respectively connected to the processors 111, 121 of the main and boot-up modules 101, 102.

The first AND gate 10 has first through third inverting input terminals to which applied respectively are a mapping strobe signal MAPSTB and segment selecting signals SS1, SS2 supplied from the main processor 111 or the boot-up processor 121. The second AND gate 11 has a first inverting input terminal, a noninverting input terminal and a second inverting input terminal, to which these signals are applied respectively. The third AND gate 12 has first and second inverting input terminals and a noninverting input terminal, to which the signals MAPSTB, SS1, SS2 are applied respectively.

The segment descriptor 114 has three four-bit registers R1, R2 and R3 each of which has a control input terminal, connected to a corresponding one of output terminals of the AND gates 10 - 12, and data input terminals for receiving three-bit address data signals D1 - D3 and a write permission/prohibition data signal D4, which are supplied from the processor 111 or 121. The register R1 has four bit-output terminals respectively connected to noninverting input terminals of fourth to seventh AND gates 13 - 16, whereas the registers R2 and R3 have their bit-output terminals connected to second noninverting input terminals of eighth to fifteenth AND gates 17 - 24, respectively. The AND gates 13 - 16 each have first to third inverting input terminals for receiving window selecting signals WA1, WA2 and a window access mode signal BSM, which are delivered from the main processor 111 or the boot-up processor 121. Each of the AND gates 17 - 20 has a first noninverting input terminal and first and second inverting input terminals for receiving these signals. The AND gates 21 - 24 each have a first inverting input terminal, a second noninverting input terminal and a second inverting input terminal for receiving the signals WA1, WA2 and BSM, respectively.

Further, the segment descriptor 114 has first to fourth OR gates 30 - 33. The first OR gate 30 for outputting a first address bit signal MA1 has three input terminals respectively connected to output terminals of the AND gates 13, 17 and 21. The second OR gate 31 for outputting a second address bit signal MA2 has input terminals which are connected respectively to output terminals of the AND gates 14, 18 and 22. Furthermore, the third OR gate 32 for outputting a third address bit signal MA3 has input terminals respectively connected to output terminals of the AND gates 15, 19 and 23, and the fourth OR gate 33 for outputting a write permission/prohibition signal PR has input terminals which are connected to output terminals of the AND gates 16, 20 and 24, respectively.

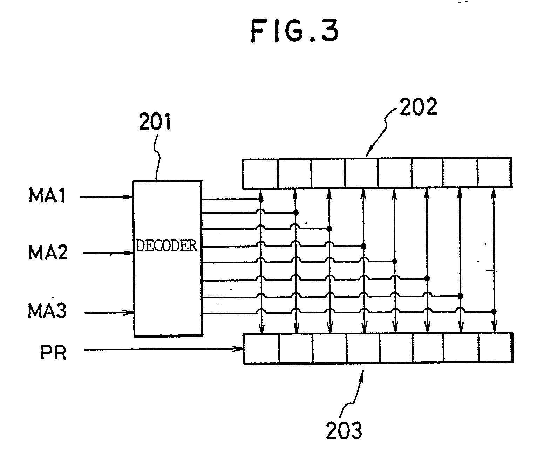

As shown in Fig. 3, output terminals of the OR gates 30 - 32 are respectively connected to three input terminals of a decoder 201 for decoding which of the first to eighth segments of the local memory 112 is indicated by the address signal, consisting of first to third address bit signals MA1 to MA3 supplied from these gates. Eight output terminals of the decoder 201 are respectively connected to eight input terminals of a first eight-bit register 202 for storing information indicating whether the individual segments of the memory 112 are accessible or not, and are also connected respectively to eight input terminals of a second eight-bit register 203 having a control input terminal for receiving the write permission/prohibition signal PR, and arranged to store information representative of permission/prohibition of writing to the respective memory segments.

A local memory protecting operation of the multiprocessor system constructed as above will be described below.

Let be assumed that the operating system is to be stored in the first three segments of the local memory 112 of the main module 101. At the start-up of the multiprocessor system, the boot-up processor 121 delivers the mapping strobe signal MAPSTB, the segment selecting signals SS1, SS2, the address data signals D1 - D3, and the write permission/prohibition data signal D4, whose respective logical levels are "0". As a result, an output signal of the logical level "1" is supplied from the AND gate 10 to the control input terminal of the register R1, so that data [0000] is written into the register R1. Subsequently, the respective logical levels of the segment selecting signal SS1 and the address data signal D1 are switched from "0" to "1", so that data [1000] is written into the register R2. Further, the respective logical levels of the segment selecting signal SS1 and the address data signal D1 are switched from "1" to "0", and those of the segment selecting signal SS2 and the address data signal D2 are switched from "0" to "1", so that data [0100] is written to the register R3.

Next, the boot-up processor 121 delivers the window selecting signals WA1, WA2 and the window access mode signal BSM whose respective logical levels are "0", so as to render the AND gates 13 - 16 to be enabled or opened, so that the address signals MA1 -MA3 of [000] and the write permission/prohibition signal of the logical level "0" are delivered from the OR gates 30 - 33, respectively. As a result, the flag information, e.g., "1", indicating that the first segment of the memory 112 is rendered accessible, is written into the first bit area of the first eight-bit register 202, whereas the flag information, e.g., "0", indicating that writing to the first memory segment is enabled is retained, which has been stored in the first bit area of the second eight-bit register 203 at the start-up of the multiprocessor system.

The boot-up processor 121 reads out the operating system from the auxiliary storage 3 through the input/output circuit 2, and causes the the first segment of the local memory 112, which is now rendered to be write-enabled, to store a first portion of the operating system. Then, the processor 121 switches the logical level of the window selecting signal WA1 from "0" to "1". As a result, the respective AND gates 13 -16 are disabled or closed, while the respective AND gates 17 - 20 are opened, so that the address signal MA1 - MA3 of [100] and the write permission signal PR are delivered from the OR gates 30 - 33, and the second segment of the local memory 112 associated with this address signal [100] is write-enabled, whereby an intermediate portion of the operating system is written into the second segment. Further, the flag information is stored in the second bit areas of the first and second eight-bit registers 202 and 203, in the aforesaid manner. Whereupon, the logical level of the window selecting signal WA1 is switched from "1" to "0", and the level of the signal WA2 is switched from "0" to "1", so that the remaining portion of the operating system is written into the third segment of the local memory 112, which is write-enabled in response to the address signal [010] delivered from the OR gates 30 - 32. In addition, the previously described flag information is stored in the third bit areas of the respective registers 202 and 203.

When the operating system is entirely stored in this manner, the main processor 111 clears the stored contents of the registers 202 and 203, and then repeats a process which is substantially the same as the aforementioned process except for the transmission operation of the operating system, with the write permission/prohibition signal D4 set at the logical level "1", to thereby rewrite the stored contents of the first to third bit areas of the register 203 into a value "1" indicating that writing to the first to third segments of the local memory 112 is prohibited. As a result, the operating system stored in the first to third segments of the memory 112 is write-disabled for protection of the operating system. Meanwhile, the aforesaid memory content protection is carried out for the case where the operating system stored in the local memory 112 of the main processor is not utilized by the processors other than the main processor.

Further, after the operating system being stored, it is possible to arbitrarily change the memory segments which should be rendered to be accessible from the processors 131, 141 of the controller modules 103, 104. Hereunder, a case will be described where the accessible memory segments are changed from the first to third memory segments to the fourth to sixth segments.

Such alteration is achieved by performing the process substantially the same as the aforesaid process. That is, after clearing the storage contents of the registers 202 and 203, the main processor 111 delivers the segment selecting signals SS1, SS2, the mapping strobe signal MAPSTB, and the write permission/prohibition data signal D4, whose respective logical levels are "0", as well as the address data signals D1 - D3 of [110], so as to write the data {1100] into the register R1. Subsequently, the processor changes the logical level of the segment selecting signal SS2 into "1", and changes the address data signals D1 - D3 into [001], so that the data of [0010] is written in the register R2. Further, the processor changes the logical levels of the segment selecting signals SS1, SS2 into "0" and "1", respectively, and changes the address data signals D1 -D3 into [101], so that the data [1010] is written in the register R3. Whereupon, the main processor delivers the window selecting signals WA1, WA2 and the window access mode signal BSM, whose respective logical levels are "0", so as to cause the fourth bit area of the register 202 to store information indicating that the fourth segment of the local memory 112 is accessible. Subsequently, information indicating that the fifth and sixth memory segments are accessible is stored in sequence, with the levels of the signals WA1 and WA2 switched. As a result, access to the first to third memory segments is prohibited, so as to prevent destruction of the operating system stored in these segments. In the meantime, if it is desired to prohibit writing to the fourth to sixth memory segments, the write prohibition flag information is stored in the fourth to sixth bit areas of the register 203 by means of the aforesaid process.

In the above-mentioned manner, the information indicating whether the first to eighth memory segments are rendered accessible or not is stored in the register 202, and the information indicating that writing to the memory segments is permitted or prohibited is stored in the register 203. The controller processors 131 and 141 refer to the information stored in both the registers and execute the the memory access and the write operation only when they are permitted. In this connection, when the processors 131, 141 access to the local memory 112, the window module 113 provides data for effecting conversion from the global address representative of the memory areas of the memory 112 to be accessed, into the local memory address representative of the same memory areas.

In the foregoing embodiment, the fourth bit areas of the four-bit registers R1 - R3 are used for selective write prohibition processing. Alternatively, five-bit registers may be provided, which have five bit areas utilized for selective read-out prohibition processing.

## Claims

1. A local memory protection device for use in a multiprocessor system of a type where a local memory connected to at least one of a plurality of processors connected to a global bus is accessible, through window means, by at least one different processor other than said at least one processor, comprising:
means for generating coded information representative of a segment among a plurality of segments of said local memory, which is to be rendered accessible by said at least one different processor; and
means for storing said coded information delivered from said coded information generating means in a manner permitting said stored information to be updated.

2. The local memory protection device according to claim 1, further including:
means for storing flag information representing that writing to the memory segment represented by said coded information is prohibited.

3. The local memory protection device according to claim 1 or 2, wherein said coded information generating means includes said at least one processor and said different processor other than said at least one processor.

4. The local memory protection device according to claim 3, wherein said different processor is a boot-up processor.

5. The local memory protection device according to claim 1, wherein said coded information generating means is operable to store the coded information generated by said coded information generating means and representative of a segment other than a predetermined segment, after said local memory is stored at the predetermined segment thereof with an operating system.

6. The local memory protection device according to claim 2, wherein said flag information memory means is operable to store flag information which represents that writing to a memory segment stored with an operating system is prohibited.

7. A local memory protection device for use in a multiprocessor system of a type where a local memory connected to at least one of a plurality of processors connected to a global bus is accessible, through window means, by at least one different processor other than the at least one processor, comprising:
means for generating coded information representative of a segment among a plurality of segments of said local memory, which is to be rendered accessible by said at least one different processor; and
means for storing flag information indicating that writing to the memory segment represented by said coded information is prohibited.

FIG. I

PROCESSOR
PROCESSOR
PROCESSOR
PROCESSOR
MAIN MODULE
101
111
102
121
103
131
104
141
113a
112
113
114
BOOT-UP MODULE (CHANNEL)
CONTROLLER MODULE (CHANNEL)
CONTROLLER MODULE (CHANNEL)
LOCAL MEMORY
WINDOW MEMORY
DESCRIPTOR
1
3
2
INPUT/OUTPUT CIRCUIT
AUXILIARY STORAGE DEVICE

FIG.2

10
MAPSTB
SS1
SS2
D1
D2
D3
D4
R1
13
14
15
16
30
MA1
31
MA2
32
MA3
33
PR
11
R2
17
18
19
20
12
R3
21
22
23
24
BSM
WA2
WA1

FIG.3

201
202
MA1
MA2
MA3
PR
DECODER
203

# INTERNATIONAL SEARCH REPORT

International Application No PCT/JP88/01054

**I. CLASSIFICATION OF SUBJECT MATTER** (if several classification symbols apply, indicate all) [6]

According to International Patent Classification (IPC) or to both National Classification and IPC

Int.Cl[4] G06F12/14, G06F15/16

**II. FIELDS SEARCHED**

Minimum Documentation Searched [7]

| Classification System | Classification Symbols |
|---|---|
| IPC | G06F12/14 |

Documentation Searched other than Minimum Documentation to the Extent that such Documents are Included in the Fields Searched [8]

| | |
|---|---|
| Jitsuyo Shinan Koho | 1926 - 1987 |
| Kokai Jitsuyo Shinan Koho | 1926 - 1987 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 51-150928 (Hitachi, Ltd.) 24 December 1976 (24. 12. 76) Page 11, line 8 to page 13, line 13, Figs. 5 to 7 (Family: none) | 1, 2, 3, 6 |
| A | JP, A, 50-36041 (Hitachi, Ltd.) 4 April 1975 (04. 04. 75) (Family: none) | 1, 2, 6 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| November 1, 1988 (01. 11. 88) | January 23, 1989 (23. 01. 89) |
| **International Searching Authority** | **Signature of Authorized Officer** |
| Japanese Patent Office | |